# FASCICULE DE BREVET EUROPEEN

(11) **EP 3 946 973 B1**
(45) Date de publication et mention de la délivrance du brevet: **15.02.2023**
(21) Numéro de dépôt: 20715777.7
(22) Date de dépôt: 19.03.2020
(51) Int. Cl.: B60C 9/28, B60C 9/24, B60C 11/03, B60C 9/20

(54) **PNEUMATIQUE A COUCHES DE TRAVAIL COMPRENANT UNE ARCHITECTURE ET UNE SCULPTURE OPTIMISEES**
REIFEN MIT ARBEITSSCHICHTEN MIT OPTIMIERTER ARCHITEKTUR UND LAUFFLÄCHENGESTALTUNG
TYRE WITH WORKING LAYERS COMPRISING AN OPTIMISED ARCHITECTURE AND TREAD DESIGN

(30) Priorité: 28.03.2019 FR 1903217
(43) Date de publication de la demande: 09.02.2022
(73) Titulaire: COMPAGNIE GENERALE DES ETABLISSEMENTS MICHELIN, 63000 Clermont-Ferrand (FR)
(72) Inventeur: TOURNEUX, Vincent, 63040 CLERMONT-FERRAND Cedex 9 (FR); FABING, Daniel, 63040 CLERMONT-FERRAND Cedex 9 (FR); FRAYSSE, Patrice, 63040 CLERMONT-FERRAND Cedex 9 (FR); ALBOUY, Mathieu, 63040 CLERMONT-FERRAND Cedex 9 (FR); CHAMBRIARD, François, 63040 CLERMONT-FERRAND Cedex 9 (FR)
(74) Mandataire: Desbordes, Guillaume
(86) Numéro de dépôt international: PCT/EP2020/057594
(87) Numéro de publication internationale: WO 2020/193358

(56) Documents cités:
- WO-A1-2018/073547
- WO-A1-2018/224743
- FR-A1- 3 057 810
- FR-A1- 3 057 812
- JP-A- 2011 031 841

## Description

La présente invention concerne un pneumatique destiné à être monté sur un véhicule, et plus particulièrement le sommet d'un tel pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Le plan circonférentiel médian dit plan équateur divise le pneumatique en deux demi tores sensiblement symétriques, le pneumatique pouvant présenter des dissymétries de bande de roulement, d'architecture, liées à la précision de fabrication ou au dimensionnement.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équateur, selon la direction axiale, que » et « plus éloigné du plan équateur, selon la direction axiale, que ». Une « distance radiale » est une distance par rapport à l'axe de rotation du pneumatique, et une « distance axiale » est une distance par rapport au plan équateur du pneumatique. Une « épaisseur radiale » est mesurée selon la direction radiale, et une « largeur axiale » est mesurée selon la direction axiale.

Dans ce qui suit, l'expression « à l'aplomb de » signifie, « pour chaque méridien, radialement intérieur dans la limite des coordonnées axiales délimitées par ». Ainsi « les points d'une couche de travail à l'aplomb d'une rainure » désignent pour chaque méridien, l'ensemble des points de la couche de travail radialement intérieurs à la rainure dans la limite des coordonnées axiales délimitées par la rainure.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

Le sommet comprend au moins une armature de sommet radialement intérieure à la bande de roulement. L'armature de sommet comprend au moins une armature de travail comprenant au moins une couche de travail composée d'éléments de renforcement parallèles entre eux formant, avec la direction circonférentielle, un angle compris entre 15° et 50°. L'armature de sommet peut également comprendre une armature de frettage comprenant au moins une couche de frettage composée d'éléments de renforcement formant, avec la direction circonférentielle, un angle compris entre 0° et 10°, l'armature de frettage étant le plus souvent mais pas obligatoirement radialement extérieure aux couches de travail.

Pour toute couche d'éléments de renforcement d'armature de sommet, de travail, ou autre, une surface continue, dite surface radialement extérieure (SRE) de la dite couche, passe par les points les plus radialement extérieurs de chaque élément de renforcement, de chaque méridien. Pour toute couche d'éléments de renforcement d'armature de sommet, de travail, ou autre, une surface continue, dite surface radialement intérieure (SRI) de la dite couche, passe par les points le plus radialement intérieur de chaque élément de renforcement, de chaque méridien. Les distances radiales entre une couche d'éléments de renforcement et tout autre point, sont mesurées depuis l'une ou l'autre de ces surfaces et de manière à ne pas intégrer l'épaisseur radiale de la dite couche. Si l'autre point de mesure est radialement extérieur à la couche d'éléments de renforcement, la distance radiale est mesurée depuis la surface radialement extérieure SRE à ce point, et respectivement depuis la surface radialement intérieure SRI à l'autre point de mesure si celui-ci est radialement intérieur à la couche d'éléments de renforcement. Ceci permet de prendre des distances radiales cohérentes d'un méridien à l'autre, sans avoir à tenir compte des variations locales possibles liées aux formes des sections des éléments de renforcement des couches.

Afin d'obtenir des performances en adhérence sur sol mouillé, des découpures sont disposées dans la bande de roulement. Une découpure désigne soit un puits, soit une rainure, soit une incision, soit un sillon circonférentiel et forme un espace débouchant sur la surface de roulement.

Une rainure présente, sur la surface de roulement, deux dimensions principales caractéristiques : une largeur W et une longueur Lo, telle que la longueur Lo est au moins égale à 2 fois la largeur W. Une rainure est donc délimitée par au moins deux faces latérales principales déterminant sa longueur Lo et reliées par une face de fond, les deux faces latérales principales étant distantes l'une de l'autre d'une distance non nulle, dite largeur W de la rainure dite parfois incision. Une incision est une rainure spécifique dont la largeur W est faible au point que ses faces latérales entrent en contact lorsque la dite incision est en contact avec sol.

Une rainure débouchante est une rainure débouchant dans une rainure qui peut être un sillon circonférentiel. Un sillon circonférentiel est une rainure de forte largeur Ws au moins égale à 6 mm faisant localement un angle avec la direction circonférentielle au plus égal à 45° et formant un espace débouchant sur toute la circonférence du pneumatique. Dans de nombreuses variantes de pneumatiques, l'angle formé par les sillons circonférentiels avec la direction circonférentielle est constant et nul sur toute la circonférence. Dans d'autres variantes, certains sillons sont des suites continues sur toute la circonférence de rainures de différents angles et dont la continuité forme un espace débouchant sur toute la circonférence du pneumatique.

La profondeur de la découpure est la distance radiale maximale entre la surface de roulement et le fond de la découpure. La valeur maximale des profondeurs des découpures est nommée profondeur de sculpture D.

Selon leurs dispositions circonférentielles ou transversales, les rainures et les sillons circonférentiels déterminent des blocs ou des nervures de matériaux caoutchouteux dans la bande de roulement. Une nervure peut contenir des rainures. Dans les bandes de roulement complexes, une nervure à l'état neuf, peut après usure se transformer en une succession de blocs. Les faces latérales des rainures et des sillons circonférentiels sont aussi dénommées les falaises des blocs ou des nervures qu'ils délimitent.

Les surfaces de fond sont constituées des points reliant les surfaces latérales des rainures qui forment des angles compris entre 0 et 70° avec la direction radiale. Les surfaces latérales peuvent contenir des discontinuités, des parties en surplomb où l'angle local n'est pas dans cet intervalle. Néanmoins l'homme du métier saura déterminer les surfaces latérales et la surface de fond malgré ces discontinuités.

Les surfaces de fond débouchantes ont une courbe de fond. Les points les plus évidents à déterminer de la courbe de fond sont le ou les points Ps communs entre la surface de fond de la rainure et la ou les surfaces, latérales ou de fond, du ou des sillons circonférentiels dans lequel ou lesquels la rainure considérée débouche. La courbe de fond correspond mathématiquement à la ligne de talweg de la surface de fond, à savoir les points les plus radialement intérieurs de la surface de fond depuis les deux points PS si la rainure débouche dans deux sillons circonférentiels ou depuis le seul point PS jusqu'à l'autre extrémité axiale de la rainure dans le cas d'une lamelle borgne, terminée par une troisième surface latérale, cette extrémité Pe, étant déterminée comme le point le plus radialement intérieur de la courbe de jonction entre la surface de fond et cette troisième surface latérale de la rainure considérée.

La courbe de fond est déterminée pour les rainures formant un angle moyen au moins égal à 15° avec l'axe circonférentiel par l'ensemble des points les plus radialement intérieurs des courbes résultantes de l'intersection de la surface de fond et des plans circonférentiels passant entre les deux points de jonction de la surface de fond et des sillons circonférentiels PS de la rainure ou entre les deux extrémités PS et Pe de la rainure. Si l'intersection entre l'un des plans et la courbe de fond n'est pas unique, le point considéré comme faisant partie de la courbe sera le point le plus équidistant des points les plus radialement intérieurs de l'intersection entre deux faces latérales et le plan circonférentiel considéré.

Un pneumatique doit répondre à de multiples critères de performance portant sur des phénomènes comme l'usure, l'adhérence sur différents types de sol, la résistance au roulement, le comportement dynamique, le bruit. Ces critères de performance conduisent parfois à des solutions s'opposant à d'autres critères. Ainsi les documents FR3057810 et FR3057811 divulguent des pneumatiques dont les couches de sommet sont ondulées. Ces ondulations permettent d'augmenter la rigidité transversale du couplage entre l'armature de sommet et la bande de roulement. En fonction des matériaux de la bande de roulement choisis, onduler les couches de sommet permet d'améliorer la performance en comportement du pneumatique, d'améliorer ses performances en adhérence et plus particulièrement d'adhérence mouillé, en résistance au roulement, sans modifier ses performances en usure et en endurance du sommet.

Cependant cette technologie a une influence sur la forme d'usure de la bande de roulement. Les ondulations dont il est question dans les documents cités et dans la présente invention, sont telles que les points de l'ondulation sont radialement extérieures aux points de la couche de sommet ondulée sous la rainure la plus proche du point considéré. Il s'agit de diminuer l'épaisseur de la bande de roulement radialement extérieure à l'ondulation afin de diminuer le cisaillement des compositions de caoutchouc de la bande de roulement afin d'améliorer la rigidité du sommet du pneumatique et ainsi de gagner en performances en comportement et en résistance au roulement. Selon le type de compositions de caoutchouc de la bande de roulement, et leurs performances en hystérèse à 0° et à 60° déterminant leurs performances en adhérence sur sol mouillé et en résistance au roulement, il est possible d'améliorer l'adhérence ou/et la résistance au roulement.

Dans cette configuration, les ondulations de la couche de sommet la plus radialement extérieure, ou de plusieurs des couches sommet, la distance entre ces couches étant sensiblement constante sur leur surface dans la partie centrale du sommet, induisent une forme d'usure circonférentielle particulière plus prononcée sur les bords axiaux des nervures ou des blocs radialement extérieurs à une ondulation, à savoir à proximité des falaises des dits nervures ou blocs.

En effet sous l'action de la pression interne du pneumatique au gonflage, la couche de carcasse et les couches de sommet subissent une tension axiale et circonférentielle qui tend à faire diminuer l'amplitude radiale des ondulations. Ce déplacement des couches de sommet déplace également radialement les composés caoutchouteux radialement extérieurs à l'ondulation. Le déplacement est minimum dans les zones où l'ondulation est minimale ou absente notamment à l'aplomb des sillons circonférentiels. De ce fait, pour un bloc ou une nervure radialement extérieure à une ondulation, le déplacement des falaises des nervures est inférieur au déplacement au centre du bloc ou de la nervure. La pression de contact est de ce fait augmentée sur la zone de contact à proximité des falaises des nervures sensiblement longitudinales générant davantage d'usure. Cette usure est particulièrement visible pour les faces latérales des sillons circonférentiels. Il est possible de compenser cette usure en adoptant un profil au moins axialement bombé des blocs et des nervures. Lorsque le pneumatique est convenablement dimensionné, le bombé des blocs et des nervures est conservé tout le long de la vie du pneumatique.

Les ondulations des couches de sommet étant présentes tout au long de la vie du pneumatique, cette surpression au niveau des falaises des blocs ou des nervures est continue durant toute la vie du pneumatique. Selon l'état de la technique, les rainures présentes dans une bande de roulement, débouchantes ou non, ont une surface de fond dont les points les plus radialement intérieurs, ou courbe de fond, ne sont pas adaptés aux ondulations des couches de sommet et de ce fait sont situés sensiblement à la même distance radiale de l'axe de rotation du pneumatique. L'usure du pneumatique, par érosion du ou des compositions de caoutchouc constituant la bande de roulement diminue progressivement la hauteur de sculpture.

Les falaises des nervures ou de blocs s'usant plus rapidement que leurs centres, cette usure s'effectue selon un profil transversal d'usure bombé. Avec une courbe de fond située sur un même rayon, la partie d'une rainure débouchante à proximité de la falaise de la nervure ou du bloc dans lequel elle se trouve, s'érode plus vite donc et disparait avant la partie de la dite rainure au centre de la dite nervure ou du dit bloc.

En roulage, dans l'aire de contact, la falaise en raison de la surpression vient fermer la rainure du côté où à l'état neuf la rainure était débouchante. Cette fermeture de la rainure crée une onde sonore qui augmente le niveau de bruit du pneumatique en roulage de manière identique qu'une lamelle non débouchante.

WO2018/224743 décrit des pneumatiques comprenant des couches de sommet comprenant des ondulations.

L'objectif principal de la présente invention est donc d'améliorer les performances en bruit et en adhérence sur sol mouillé d'un pneumatique dont les couches de sommet contiennent des ondulations radialement à l'intérieur de la partie centrale de la bande de roulement et comprenant des rainures débouchantes radialement extérieures aux ondulations, cette amélioration se mesurant lorsque les dites rainures sont encore visibles mais de faible profondeur en raison de leur usure.

Cet objectif est atteint par un pneumatique comprenant :
- une bande de roulement destinée à entrer en contact avec un sol par l'intermédiaire d'une surface de roulement d'une largeur axiale L et comprenant une partie centrale de la bande de roulement d'une largeur égale à 0,8*L, cette partie centrale de la bande de roulement comprenant au moins deux sillons circonférentiels,
- un sillon circonférentiel formant un espace débouchant sur toute la circonférence du pneumatique sur la surface de roulement étant délimitée par deux faces latérales principales reliées par une face de fond, et ayant une largeur moyenne Ws au moins égale à 6 mm et une profondeur D au moins égale à 4 mm,
- la partie centrale de la bande de roulement comprenant des rainures formant un espace débouchant sur la surface de roulement, formant un angle au moins égal à 15° avec l'axe circonférentiel, étant délimitée par deux faces latérales principales reliées par une face de fond, une rainure ayant une largeur Wr définie par la distance moyenne entre les deux faces latérales, et ayant une largeur Wr au moins égale à 0.5 mm, au moins cinquante pourcent de ces rainures étant des rainures débouchantes, à savoir débouchant dans un ou deux sillons circonférentiels,
- chaque rainure débouchante, comprenant une courbe de fond Cf constituée par l'ensemble des points les plus radialement intérieurs de la surface de fond de la dite rainure, chaque courbe de fond comprenant au moins un point Ps, et au plus deux, en commun avec le ou les deux sillons dans lequel débouche ladite rainure et un point le plus radialement extérieur Pext,
- une couche de carcasse et une armature de sommet, radialement intérieure à la bande de roulement, comprenant au moins une couche de sommet, la ou les couches de sommet étant des couches d'éléments de renforcement,
   l'armature de sommet comprenant une armature de travail, comprenant au moins une couche de travail,
- chaque couche de travail comprenant des éléments de renforcement, au moins partiellement métalliques enrobés par un matériau élastomérique, parallèles entre eux et formant avec la direction circonférentielle (XX') du pneumatique, un angle orienté dont la valeur absolue est au moins égale à 15° et au plus égale à 50°,
- chaque couche de sommet s'étendant radialement depuis une surface radialement intérieure (SRI) jusqu'à une surface radialement extérieure (SRE), la couche de sommet la plus radialement extérieure à l'aplomb de la partie centrale de la bande de roulement, comprenant au moins une ondulation dite ondulation centrale, d'amplitude radiale A,
- la portion de la surface radialement extérieure (SRE) de la couche de sommet de ladite ondulation centrale est radialement extérieure aux points de la couche de sommet la plus radialement extérieure à l'aplomb de la face de fond du sillon circonférentiel le plus proche de ladite ondulation,
- sur au moins 10% de la surface radialement extérieure (SRE) de ladite couche de sommet à l'aplomb de la partie centrale de la bande de roulement, la distance radiale (do) entre la surface radialement extérieure (SRE) de la couche de sommet la plus radialement extérieure et la surface de roulement au niveau de ladite ondulation, est inférieure d'au moins 1 mm à la distance radiale (dc) entre la surface radialement extérieure (SRE) de la couche de sommet la plus radialement extérieure et la surface de roulement, distance à l'aplomb de la face de fond du sillon circonférentiel le plus proche du point considéré de la dite surface,
- la distance radiale (d1) entre la surface radialement extérieure (SRE) de la couche de sommet la plus radialement extérieure et la face de fond des sillons circonférentiels est au plus égale à 4 mm,
- au moins 50% des rainures débouchantes radialement extérieures à une ondulation centrale de la couche d'éléments de renforcement la plus radialement extérieure, sont dites adaptées à l'ondulation centrale, une rainure débouchante adaptée à l'ondulation, à laquelle elle est radialement extérieure, étant telle que le ou les points Ps d'intersection de la courbe de fond Cf de la dite rainure débouchante adaptée à l'ondulation et du ou des sillons circonférentiel dans le ou lesquels la dite rainure débouchante adaptée à l'ondulation débouche, sont distants du point Pext le plus radialement extérieur de la dite courbe de fond Cf, d'une distance radiale (d2) au moins égale au tiers de l'amplitude radiale (A/3) de l'ondulation centrale située à l'aplomb de la dite rainure débouchante adaptée à l'ondulation et la dite courbe Cf est radialement croissante depuis le ou les points d'intersection Ps vers le point Pext.

Les rainures dont il est question dans l'invention, peuvent être de largueur constante ou non. L'invention fonctionne également avec des rainures de largeurs variables, par exemple présentant une largeur plus importante au niveau de la surface de fond pour générer davantage de creux dans la surface de contact à un niveau d'usure dévoilant ces largeurs augmentées, dans le but d'améliorer l'adhérence. Pour que l'invention fonctionne, il suffit que la courbe de fond soit adaptée à l'ondulation. De cette manière quelle que soit l'usure, la courbe de fond assure que la rainure est débouchante, annulant le risque de perte d'arrêtes qui diminuerait l'adhérence et la création d'une rainure non débouchante ou borgne ayant comme conséquence la dégradation de la performance en bruit par rapport au pneumatique neuf.

L'effet de l'invention peut se mesurer tout au long de la vie du pneumatique en fonction de la profondeur des rainures radialement extérieures aux ondulations de la couche la plus radialement extérieure de l'armature de sommet ou des couches de sommet. Si la rainure est de faible profondeur, l'effet de l'invention est mesurable en début d'usure du pneumatique. Si le profil de fond de la rainure est proche du point le plus radialement extérieur du témoin d'usure, l'effet de l'invention est mesurable en limite d'usure du pneumatique. Si les rainures en question, ont différentes profondeurs, l'effet peut être perçu sur la totalité de la vie du pneumatique.

La couche de sommet la plus radialement extérieure doit comporter une ondulation. Ces ondulations ont une amplitude radiale au moins égale à 1 mm, de préférence au moins égale à 1.5 mm, de préférence au moins égale à 2 mm. Plus l'ondulation est de forte amplitude radiale plus l'impact sur la rigidité du pneumatique est important et plus les performances en résistance au roulement, en comportement, en adhérence associées à cette architecture sont importants. Plus l'amplitude radiale de ces ondulations est importante, plus les surpressions dans la surface de roulement au niveau des falaises des nervures ou blocs de la bande de roulement sont importantes et plus il est nécessaire de bomber les nervures ou les blocs radialement extérieurs aux ondulations et plus il est nécessaire que les profils de fond des rainures soient courbes afin de préserver ces gains durant toute la durée d'utilisation du pneumatique.

Il est nécessaire que le ou les points Ps d'intersection de la courbe de fond Cf de la dite rainure et du ou des sillons dans le ou lesquels la dite rainure débouche, soient distants du point Pext le plus radialement extérieur de la dite courbe de fond Cf, d'une distance radiale (d2) au moins égale au tiers de l'amplitude radiale (A/3) de l'ondulation située à l'aplomb de la dite rainure et que la dite courbe soit radialement croissante depuis le ou les points d'intersection Ps vers le point Pext.

Par radialement croissante, nous entendons que la dérivée de la distance radiale du point de la courbe de fond, à l'axe de rotation du pneumatique, en fonction de l'abscisse curviligne du point, est au moins égale à 0, l'abscisse curviligne ayant pour origine un premier point Ps et pour fin le point Pext, sur 90% des points la courbe de fond, l'existence de décrochés locaux de faible amplitude radiale, inférieure à 20% de l'amplitude radiale de la courbe de fond, ne nuisant pas à l'invention. Si la rainure débouche dans deux sillons circonférentiels et donc à deux points Ps, cette propriété doit être vérifiée en partant du deuxième point Ps.

De préférence le ou les points Ps d'intersection de la courbe de fond Cf de la dite rainure et du ou des sillons dans le ou lesquels la dite rainure débouche, sont distants du point Pext le plus radialement extérieur de la dite courbe de fond Cf, d'une distance radiale (d2) au moins égale à la moitié de l'amplitude radiale (A/2) de l'ondulation centrale située à l'aplomb de la dite rainure, et préférentiellement au plus égale à 1.5 fois l'amplitude radiale (1.5*A) de l'ondulation centrale située à l'aplomb de la dite rainure. Pour une distance d2 au moins égale à A/2, le risque que la forme d'usure des nervures ou des pains ne donne pas l'effet escompté diminue et la fiabilité de l'invention augmente. Pour une distance d2 supérieure à 1.5A, il y a une baisse de rigidité de la falaise de la nervure par rapport à son centre qui accentue l'usure locale, ce qu'il convient d'éviter.

Pour le bon fonctionnement de l'invention, il est nécessaire que la couche de sommet la plus radialement extérieure soit ondulée. Il est préféré que d'autres couches de sommet soient ondulées selon des ondulations sensiblement de même amplitude radiale et de même position que la couche de sommet la plus radialement extérieure, afin de conserver l'épaisseur de l'empilement des couches ondulées constante sur la plus grande surface de ces couches de sommet. Cela permet d'obtenir une efficacité maximale des ondulations.

Préférentiellement toutes les couches de sommet sont ondulées, et leurs ondulations sont sensiblement identiques en position et en amplitude radiale sur leurs portions situées à l'aplomb de la partie centrale de la bande de roulement, à la variation de fabrication près.

Il est préféré que au moins 90 pourcents et de préférence toutes les rainures débouchantes radialement extérieures à une ondulation centrale de la couche de sommet la plus radialement extérieure, sont adaptées aux dites ondulations centrales (51) de la couche de sommet la plus radialement extérieure auxquelles elles sont respectivement radialement extérieures.

Dans une architecture usuelle comprenant une couche de frettage, de préférence textile, deux couches de travail comprenant des éléments de renforcement métalliques, la couche de frettage étant la plus radialement extérieure des couches de sommet, il est nécessaire que cette couche de frettage soit ondulée. Les performances, résistance au roulement, adhérence ou comportement sont plus élevées encore si la couche de travail contiguë à la couche de frettage est ondulée avec des ondulations de même amplitude radiale et de mêmes positions au moins partiellement et au mieux sur la totalité de la surface de la couche de frettage. Ces mêmes performances sont plus élevées encore, si les deux couches de travail et la couche de frettage sont ondulées avec des ondulations de même amplitude radiale et de mêmes positions. L'invention fonctionne même si une partie de la couche de travail contigüe à la couche de frettage est ondulée et couplée sur ces ondulations à la couche de frettage et une autre partie découplée.

Une condition nécessaire pour le fonctionnement de l'invention est que les couches de sommet soient à une distance limitée de la surface de roulement notamment au niveau du point le plus radialement extérieur de l'ondulation. Selon le degré souhaité de protection de la couche de sommet la plus radialement extérieure, l'épaisseur de composé caoutchouteux entre la couche de sommet la plus radialement extérieure et le fond des rainures est au moins égale à 0.5 et au plus égale à 4 mm. Il ne s'agit pas d'augmenter cette épaisseur de composé caoutchouteux, mais bien de réduire la distance entre la surface de roulement à l'état neuf et le point le plus radialement extérieur de l'ondulation. De fait une condition suffisante est que la distance radiale (do) entre la surface radialement extérieure (SRE) de la couche de sommet la plus radialement extérieure et la surface de roulement au niveau de l'ondulation est inférieure d'au moins 1 mm à la distance radiale (dc) entre la surface radialement extérieure (SRE) de la couche de sommet la plus radialement extérieure et la surface de roulement, distance (dc) à l'aplomb du centre de la face de fond du sillon circonférentiel le plus proche du point considéré de la dite surface. Cette condition garantit une amplitude radiale de l'ondulation minimale de 1mm et que l'ondulation à l'aplomb des nervures ou des blocs ait bien pour objet de réduire la distance de la couche la plus radialement extérieure à la surface de roulement par rapport à un pneumatique sans ondulation.

L'amplitude radiale de chaque ondulation dans une couche de sommet est mesurée comme la distance radiale entre le point P1 le plus radialement extérieur de la surface radialement extérieure (SRE) de ladite couche de sommet à l'aplomb du bloc ou de la nervure considérée et le point le plus radialement intérieur de la surface radialement extérieure (SRE) de ladite couche de sommet à l'aplomb du sillon circonférentiel le plus proche du point P1. Si il existe deux sillons circonférentiels équidistants du point le plus radialement extérieur P1 de l'ondulation considérée, le point pris en compte pour le calcul de l'amplitude radiale sera celui donnant la valeur de l'amplitude radiale la plus élevée. L'amplitude radiale est mesurée dans un plan de coupe méridien comprenant l'axe de rotation du pneumatique et perpendiculaire à la direction circonférentielle du pneumatique. Si l'amplitude radiale varie selon la direction circonférentielle, la valeur retenue pour l'amplitude radiale est celle qui est la plus élevée.

Les ondulations considérées sont des ondulations dites centrales, elles sont situées dans la partie centrale de la bande de roulement, centrée sur le plan équateur et d'une largeur de 0,8L, L étant la largeur de la surface de roulement à l'état neuf du pneumatique. La largeur L est mesurée, le pneumatique étant monté et gonflé à la pression nominale sur une jante nominale. N'est pas considéré comme une ondulation les zones de découplage entre les couches de sommet dans les parties les plus axialement extérieures du pneumatique ou épaule, en dehors de la partie centrale, dont l'objectif est uniquement de découpler les couches de sommet à leur extrémité pour éviter la fissuration des mélanges dans cette zone.

Les pneumatiques pour motocyclette ne sont généralement pas disposées à un rayon sensiblement constant. Cependant pour ces pneumatiques, les couches de matériaux du sommet sont disposées selon une courbe continue, convexe. L'invention pourrait s'appliquer également sur ces pneumatiques, les ondulations créant des zones de concavité plus importante et de convexité autour de la courbe continue du pneumatique pour motocyclette selon l'état de l'art.

Il apparaît qu'une ondulation de 10% de la surface radialement extérieure de la couche de sommet la plus radialement extérieure à l'aplomb de la partie centrale de la bande de roulement, est suffisante pour mesurer un gain de performance en dynamique sous effort transversal. L'amplitude radiale de cette ondulation doit être au moins égale à 1 mm pour avoir des effets significatifs à l'échelle du pneumatique. Ainsi, dans l'invention, la différence entre la distance radiale (do) entre la surface radialement extérieure (SRE) de la couche de travail la plus radialement extérieure et la surface de roulement, est inférieure d'au moins 1 mm à la distance radiale (dc) entre la surface radialement extérieure (SRE) de la couche de travail la plus radialement extérieure et la surface de roulement, distance à l'aplomb du centre de la face de fond du sillon circonférentiel le plus proche de ladite ondulation, et ce sur une surface d'au moins 10% de ladite couche.

La solution optimale prend en compte les caractéristiques du pneumatique et possiblement du véhicule. Une optimisation peut être menée en fonction du caractère directionnel du pneumatique, de son asymétrie, du carrossage des ensembles montés par rapport au véhicule.

Préférentiellement pour la partie de l'armature de sommet à l'aplomb de la partie centrale de la bande de roulement, sur au moins 20%, préférentiellement au moins 30% et au plus 85%, de la surface radialement extérieure (SRE) de la couche de sommet la plus radialement extérieure, la distance radiale (do) entre la surface radialement extérieure (SRE) de la couche de sommet la plus radialement extérieure et la surface de roulement est inférieure d'au moins 1.5 mm, préférentiellement 2 mm, à la distance radiale (dc) entre la surface radialement extérieure (SRE) de la couche de sommet la plus radialement extérieure et la surface de roulement, distance mesurée à l'aplomb du point le plus radialement intérieur de la face de fond (243) du sillon circonférentiel le plus proche de ladite ondulation centrale du point considéré. Les paramètres de conception permettant le réglage de la dynamique sous effort transverse important, à savoir au moins de l'ordre de 50% de la charge nominale du pneumatique, sont :
- l'étendue des ondulations de la couche de travail la plus radialement extérieure, sachant que le taux d'entaillement de la sculpture, rarement inférieur à 15%, limite cette étendue à au plus 85% (85=%100%-15%). Plus l'ondulation ou les ondulations sont étendues, plus le pneumatique est rigide sous effort transversal, effet premier des ondulations.
- L'amplitude radiale de l'ondulation au moins égale à 1 mm mais limitée à 5 mm en raison des rayons de courbures à imposer aux couches de sommet.

Une solution préférée est donc que sur au moins 20%, préférentiellement au moins 30% et au plus 85%, de la surface radialement extérieure (SRE) de la couche de travail la plus radialement extérieure, la distance radiale (do) entre la surface radialement extérieure (SRE) de la couche de travail la plus radialement extérieure et la surface de roulement est inférieure d'au plus 5 mm, préférentiellement d'au plus 3 mm à la distance radiale (dc) entre la surface radialement extérieure (SRE) de la couche de travail la plus radialement extérieure et la surface de roulement, distance à l'aplomb du centre de la face de fond du sillon circonférentiel le plus proche de ladite ondulation.

Pour une performance optimale en perforation et agression du sommet sans pénaliser la résistance au roulement, la distance radiale (d1) entre la surface radialement extérieure (SRE) de la couche de travail la plus radialement extérieure et la face de fond des sillons circonférentiels, est au moins égale à 0.5 mm et au plus égale à 4 mm, préférentiellement au moins égale à 0.7 mm et au plus égale à 2 mm. En deçà des limites inférieures, le pneumatique pourrait être trop sensible aux agressions. Au-delà des limites supérieures, la résistance au roulement du pneumatique serait pénalisée.

Il est avantageux que la bande de roulement, par exemple un sillon circonférentiel de la bande de roulement, comprenne au moins un témoin d'usure, et que la distance radiale minimale (do) entre la surface radialement extérieure (SRE) de la couche la plus radialement extérieure de l'armature de sommet et la surface de roulement soit au moins égale à la distance radiale (df) entre la surface de roulement et le point le plus radialement extérieur du témoin d'usure. En effet, il est important que l'utilisateur puisse percevoir que le pneumatique est usé, grâce au témoin d'usure et cela avant de voir les éléments de renforcement de la couche la plus radialement extérieure de l'armature de sommet apparaître au niveau de la surface de roulement.

Avantageusement la distance radiale minimale (do) entre la surface radialement extérieure (SRE) de la couche la plus radialement extérieure de l'armature de sommet et la surface de roulement est au plus égale à la profondeur D du sillon circonférentiel le plus proche augmentée de 2 mm et au moins égale à la profondeur D du sillon circonférentiel le plus proche diminuée de 2 mm, et préférentiellement sensiblement égale à la profondeur D du sillon circonférentiel le plus proche. Cette solution permet un positionnement idéal de la couche d'éléments de renforcement la plus radialement extérieure de l'armature de sommet et la surface de roulement. La distance radiale minimale (do) entre la surface radialement extérieure (SRE) de la couche la plus radialement extérieure de l'armature de sommet et la surface de roulement, est forcément mesurée sur la portion radialement extérieure de l'armature sommet, donc au niveau d'une ondulation.

Préférentiellement la profondeur D d'un sillon circonférentiel est au moins égale à 5 mm, et au plus égale à 20 mm. Les profondeurs de sculpture entre 6 et 10 mm permettent un bon compromis entre les performances en usure et en résistance au roulement dans de nombreux pneumatiques de tourisme. Les profondeurs de sculpture entre 10 et 20 mm sont intéressantes pour les mêmes compromis dans les pneumatiques pour véhicules portant de lourdes charges. L'invention n'est pas limitée à des pneumatiques d'un usage particulier.

Dans le cas où la couche d'éléments de renforcement la plus radialement extérieure est une couche de frettage, il est avantageux que la couche d'éléments de renforcement la plus radialement extérieure de l'armature de sommet comprenne des éléments de renforcement en textile, de préférence de type polyamide aliphatique, polyamide aromatique, combinaison de polyamide aliphatique et de polyamide aromatique, polytéréphtalate d'éthylène ou rayonne, parallèles entre eux et formant, avec la direction circonférentielle (XX') du pneumatique, un angle B au plus égal à 10° en valeur absolue.

Une solution préférée est qu'au moins une gomme de bourrage ayant une épaisseur radiale au moins égale à 0.3 mm est positionnée à l'aplomb de chaque ondulation centrale de la couche de sommet la plus radialement extérieure de préférence radialement extérieure à la couche de carcasse, de préférence radialement intérieur à la couche de travail la plus radialement intérieure.. Ceci afin de permettre l'ondulation des nappes à la fabrication et à la cuisson. Ces gommes de bourrages peuvent être présentes sur la totalité de la circonférence du pneumatique ou disposées dans certaines portions du pneumatique selon les besoins. Il est possible de disposer plusieurs gommes de bourrage à l'aplomb de la ou des ondulations à différentes valeurs de rayons avec différentes propriétés en fonction du cahier des charges du pneumatiques. Si une seule gomme de bourrage est disposée, son épaisseur maximale est approximativement égale, pour une ondulation donnée, à l'amplitude radiale de la dite ondulation.

L'invention se prête peu aux pneumatiques configurés pour un usage en mode étendu, à savoir utilisable avec une pression interne au pneumatique inférieure à 1 bar. Ces pneumatiques sont en effet pourvus d'une gomme intérieure d'épaisseur variable, et d'une épaisseur de cette gomme élevée au niveau du flanc et du point le plus axialement extérieur du pneumatique. Cette surépaisseur donne de la rigidité radiale aux flancs mais génère une dégradation de la résistance au roulement ce qui n'est pas l'objectif de l'invention. Les pneumatiques selon l'invention, ont préférentiellement des gommes intérieures d'épaisseur au plus égale à 1.5 mm. Une autre caractéristique de ces pneumatiques selon l'invention est qu'ils ont une épaisseur variant au plus de 30% d'un bourrelet à l'autre.

Les pneumatiques dont une partie de la couche de carcasse à l'aplomb de la partie centrale du sommet est radialement intérieure aux points de la couche de carcasse à l'aplomb de l'extrémité de la couche de sommet la plus radialement intérieure sont peu compatibles avec l'invention. Ces sommets présentent des ondulations de l'ensemble des couches de sommet et de carcasse mais d'une amplitude radiale supérieure à celles de l'invention et pour un objectif d'hydroplanage ou autre. Ce type de configuration ne répond pas aux définitions géométrique de l'invention ni ne résout le même problème technique.

Il est avantageux que, la bande de roulement étant constituée par un mélange caoutchouteux, la gomme de bourrage, disposée à l'aplomb de la ou des ondulations, soit un mélange caoutchouteux ayant une perte dynamique tanδ1, mesurée à une température de 10°C et sous une contrainte de 0.7 MPa à 10 Hz, au plus égale et préférentiellement inférieure de 30% à la perte dynamique tanδ2 du ou des matériaux caoutchouteux constitutifs de la bande de roulement, mesurée à une température de 10°C et sous une contrainte de 0.7 MPa à 10 Hz. Pour un matériau de bourrage de même hystérèse, le gain en résistance au roulement est donné seulement par la diminution des sollicitations en cisaillement que ce matériau subit. Le matériau de bourrage ne subissant pas les mêmes contraintes que le matériau caoutchouteux constitutif de la bande de roulement, il est possible de modifier ses caractéristiques de manière à améliorer davantage la résistance au roulement. 30% de baisse d'hystérèse amène un gain significativement plus élevé pour l'invention.

Il est préféré que l'armature de sommet consiste en 2 nappes de travail ayant des angles opposés et une nappe de frettage, comme de nombreuses architectures de sommet actuelles.

Pour mesurer les différentes grandeurs géométriques, dont les amplitudes radiales d'ondulation et l'étendue de l'ondulation, il est usuel pour l'homme de l'art d'effectuer les mesures sur des coupes de pneu réalisées dans des plans méridiens, ou coupe méridienne. Pour obtenir davantage de précision, ces mesures peuvent être la moyenne de 4 mesures effectuées sur 4 plans méridiens disposés à 90°, les coupes de pneus sont polies pour faire apparaitre les interfaces des différents mélanges constituant le pneu. Le pneumatique étant torique, les mesures d'étendue de surface de l'ondulation revienne à des mesures de longueur sur une coupe méridienne. Par exemple on vérifiera sur une coupe méridienne que pour 10% de la longueur de la couche de sommet la plus radialement extérieure dans la partie centrale de la bande de roulement, la distance radiale entre la surface radialement extérieure de la couche de sommet la plus radialement extérieure et la surface de roulement au niveau de ou des ondulations, est inférieure d'au moins 1 mm à la distance radiale entre la surface radialement extérieure (SRE) de la couche de sommet la plus radialement extérieure et la surface de roulement, distance à l'aplomb de la face de fond du sillon circonférentiel le plus proche du point considéré de la dite surface.

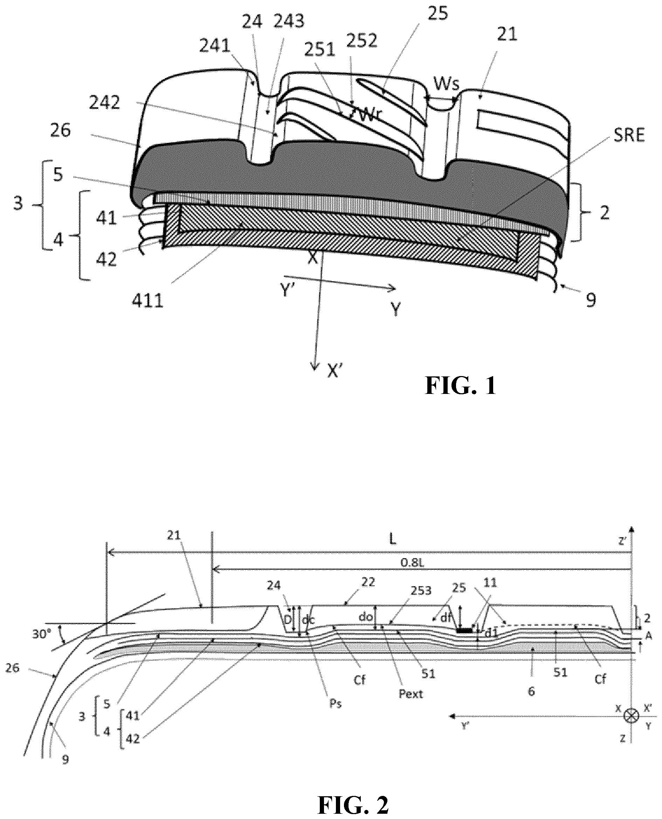

Les caractéristiques et autres avantages de l'invention seront mieux compris à l'aide des figures 1 à 7, les dites figures n'étant pas représentées à l'échelle mais de façon simplifiée, afin de faciliter la compréhension de l'invention :
- la figure 1 représente une portion de sommet du pneumatique, ses couches de sommet et sa bande de roulement,
- la figure 2 représente une demie coupe méridienne du sommet d'un pneumatique selon l'invention pourvue de rainures débouchantes (25) radialement extérieure à des ondulations et dont le profil de fond Cf est adapté à l'ondulation. Elle illustre l'amplitude radiale A d'une ondulation (51) de la couche de sommet la plus radialement extérieure 5, les différentes distances radiales, do, d1, D, df, de et un matériaux de bourrage (6) propre à créer une ondulation notamment de la couche de sommet la plus radialement extérieure,

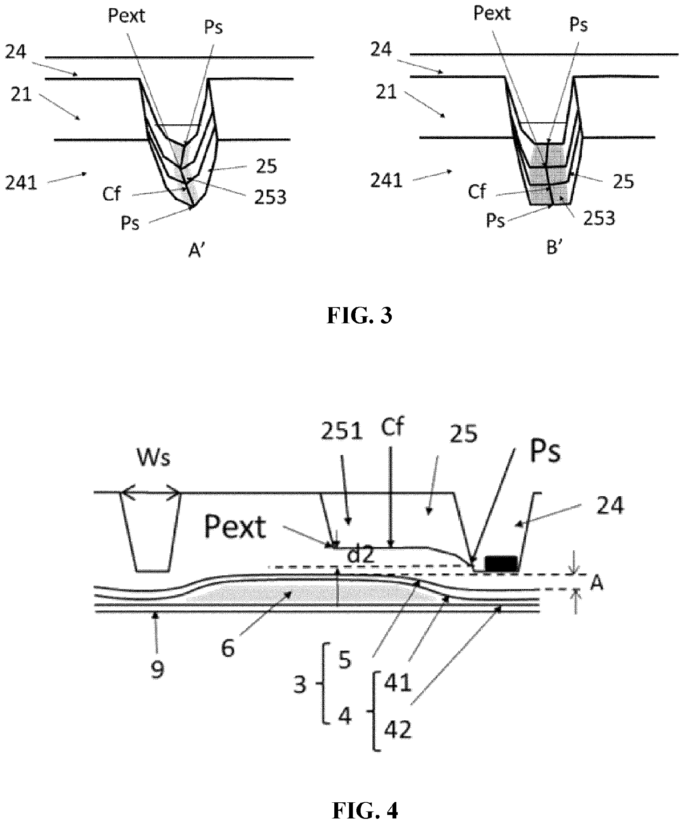

- la figure 3 représente des rainures débouchantes 25, leurs surfaces de fond et leurs courbes de fond, ou talweg Cf, ainsi que les points d'intersection Ps avec les sillons circonférentiels (24) et le point le plus radialement extérieur Pext de la courbe de fond Cf,
- les figures 4, 5 et 6 représentent une portion d'une coupe méridienne de la partie centrale 22 de la bande de roulement et la partie du sommet à son aplomb. Ces figures représentent des variantes de position du matériau de bourrage (6) dans les couches de sommet (41, 42, 5) et des variantes de rainures débouchantes (25) adaptées à l'ondulation (51) dont elles sont radialement extérieures,

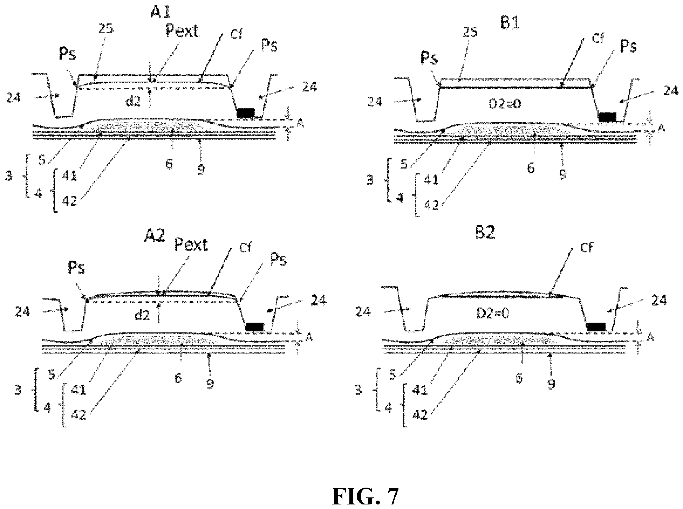

- la figure 7 représente une portion d'une coupe méridienne de la partie centrale 22 de la bande de roulement et la partie du sommet à son aplomb dans laquelle se trouve une ondulation selon l'invention A1 et selon l'état de l'art B1 à l'état neuf et à un état usé, respectivement A2 et B2, montrant l'effet de l'usure sur les deux variantes.

Une coupe méridienne du pneumatique est obtenue par découpage du pneumatique selon deux plans méridiens. Cette coupe sert à déterminer les différentes distances radiales, le centre des faces de fond des rainures et des sillons.

La figure 1 représente une portion d'un sommet de pneumatique. Sont représentés une couche de carcasse 9, radialement intérieure à l'armature de sommet 3 comprenant une armature de travail 4 contenant en l'occurrence deux couches de travail 41 et 42 composées éléments de renforcement 411 au moins partiellement métalliques enrobés par un matériau élastomérique, parallèles entre eux et formant avec la direction circonférentielle (XX') du pneumatique, un angle orienté dont la valeur absolue est au moins égale à 15° et au plus égale à 50° et une couche de frettage 5. Le pneumatique comprend également une bande de roulement 2 délimitée par la surface de roulement 21 et les surfaces latérales extérieures 26 et comprenant des découpures dont en l'occurrence deux sillons circonférentiels 24 ayant des largeur Ws au moins égales à 5 mm et des rainures 25, ayant des largeurs Wr au moins égales à 0.5 mm. Les sillons circonférentiels 24 comprennent deux faces latérales 241 et 242 et une surface de fond 243. La figure 1 montre également une rainure 25 débouchant dans deux sillons circonférentiels 24 entourée de deux rainures 25 borgnes débouchant dans un seul sillon. Les rainures comprennent des faces latérales 251 et 252 et une face de fond 253 non représentée sur la figure 1. Les portions des sillons circonférentiels représentés figure 1, forment ici avec la direction XX' un angle nul ; un sillon circonférentiel pourrait être constitué par une succession de découpures ayant un angle avec la direction XX' non nul reliées les unes aux autres de manière à former une découpure continue sur toute la circonférence du pneumatique.

Sur les figures 2, 4, 5, 6, 7, pour des raisons de commodité de représentation, les rainures sont représentées comme appartenant au plan méridien, mais les rainures peuvent être de toutes les formes connues dans l'état de la technique, que cela soit en termes d'angles et de formes : simples, ondulées, complexes, avec ou sans variation d'épaisseur.

La figure 2 représente schématiquement une demi-coupe méridienne du sommet du pneumatique selon l'invention. Elle illustre en particulier des ondulations de toutes les couches de l'armature de sommet (3) dont les couches de travail (41, 42), et la couche de sommet (5) la plus radialement extérieure à l'aide d'un matériau bourrage (6) positionné entre la couche de carcasse (9) et la couche de travail la plus radialement intérieure (42). Ce matériau de bourrage entraine l'ondulation de l'ensemble des couche de sommet, 41, 42 , 5 et donc une ondulation 51 de la couche de frettage 5 la plus radialement extérieure des couches de sommet.

La figure 2 montre comment déterminer la largeur L de la bande de roulement. La largeur L de la bande de roulement est déterminée sur un pneumatique monté, sur une jante nominale et gonflé à la pression nominale. Dans le cas d'une frontière évidente entre la surface de roulement et le reste du pneumatique, la largeur de la bande de roulement est déterminée trivialement par l'homme du métier. Dans le cas où la surface de roulement 21 est continue avec la surface latérale extérieure 26 du pneumatique, la limite axiale de la surface de roulement passe par le point pour lequel l' angle entre la tangente à la surface de roulement 21 et une direction axiale YY' est égal à 30°. Lorsqu' il existe sur un plan méridien, plusieurs points pour lesquels le dit angle est égal à 30°, on retient le point radialement le plus à l' extérieur. La largeur de la bande de roulement est égale à la distance axiale entre les deux limites axiales de la surface de roulement de part et d'autre du plan équateur.

La figure 2 illustre également les distances radiales suivantes :
- D : la profondeur d'un sillon circonférentiel (24), distance radiale maximale entre la surface de roulement (21) et la face de fond (243) du sillon, (hors puits de recreusage),
- de : distance radiale entre la surface radialement extérieure (SRE) de la couche de sommet (5) la plus radialement extérieure et la surface de roulement (21), distance à l'aplomb du point le plus radialement intérieur de la face de fond (243) du sillon circonférentiel (24),
- do : la distance radiale entre la surface radialement extérieure (SRE) de la couche de sommet (5) la plus radialement extérieure et la surface de roulement (21) au niveau de l'ondulation (51),
- d1 : distance radiale minimale (d1) entre la surface radialement extérieure (SRE) de la couche de sommet (5) la plus radialement extérieure de l'armature de sommet (3) et la face de fond (243) des sillons circonférentiels (24)
- df : la distance radiale entre la surface de roulement (21) et le point le plus radialement extérieur du témoin d'usure (11),
- A : amplitude radiale de l'ondulation mesurée pour une ondulation donnée entre le point le plus radialement extérieur de la dite ondulation et le point le plus radialement intérieur de ce dit point situé à l'aplomb du sillon circonférentiel 24 le plus proche.

Sur la figure 2 sont représentés deux ondulations 51 de la couche de sommet la plus radialement extérieure dans la partie centrale 22 du pneumatique, centrée sur le plan équateur et de largeur égale à 0.8*L. Chacune de ces ondulations est radialement intérieure à des rainures débouchantes 25 dont la courbe de fond Cf de la surface de fond 253, est adaptée à l'ondulation. La courbe de fond Cf est adapté dans la mesure où les point Ps d'intersection de la courbe de fond et des parois latérales 241, 242 des sillons circonférentiels 24 dans lesquels les rainures 25 débouchent sont radialement intérieur à un point Pext, le point le plus radialement extérieur de la courbe de fond Cf et de telle manière que la distance radiale d2 entre Pext et l'un et l'autre des points Ps est au moins égale au tiers de l'amplitude radiale de l'ondulation concernée, les amplitudes radiales des ondulations pouvant varier d'une nervure à une autre. De plus la courbe de fond est radialement croissante depuis les points Ps jusqu'au point Pext.

La figure 3 représente deux rainures débouchantes dans deux sillons 24. Du premier sillon en avant plan n'est esquissée que la face latérale 241. Dans la figure A', la courbe de fond ou talweg de la surface de fond 253 est unique et peut être déterminée aisément. On détermine la courbe d'intersection de la face latérale 241 du sillon circonférentiel et de la surface de fond 253 de la rainure et on détermine son point le plus radialement intérieur Ps, premier point de la courbe de fond. On détermine de même l'autre extrémité de la courbe de fond Cf soit en faisant de même avec l'autre sillon soit en trouvant la courbe d'intersection entre la surface de fond 253 et la surface fermant la rainure dans le cas d'une rainure borgne. Ensuite, par l'intersection des plans circonférentiels compris entre les extrémités de la courbe Cf avec la surface de fond 253, on détermine l'ensemble des points formant la courbe de fond Cf. Dans la figure 3 B', la courbe Cf n'est pas unique, dans ce cas, on considère une courbe Cf moyenne constituée par les points les plus équidistants des faces latérales 251, 252 de la rainure 25 considérée parmi les points possibles PS d'intersection avec le ou les sillons circonférentiels. Ensuite on fait de même avec les courbes issues de l'intersection des plans circonférentiels et de la surface de fond 253 pour déterminer le reste de Cf. Un homme de l'art sait sans difficulté déterminer la courbe de fond d'une rainure.

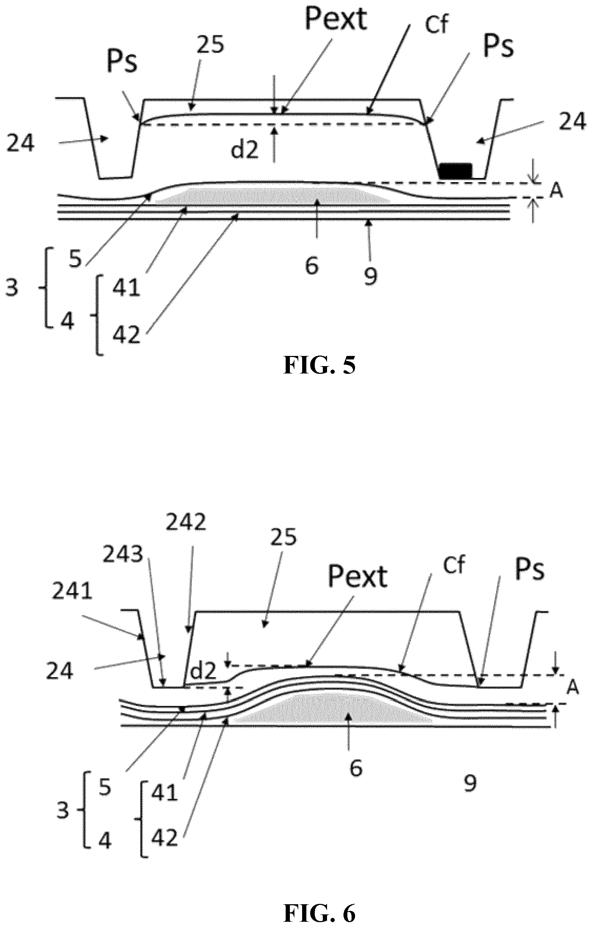

Les figures 4, 5, 6 montrent des variantes de positions possibles du matériau de bourrage 6 dans le sommet 3 :
- Entre la couche de carcasse 9 et la couche de travail la plus radialement intérieure, comme illustré sur la figure 6
- Entre les couches de travail 41 et 42, comme illustré sur la figure 4
- Entre la couche de travail la plus radialement extérieure 41 et la couche de sommet la plus radialement extérieure 5, comme illustré sur la figure 5
- Il est possible d'imaginer plusieurs matériaux de bourrage positionnés dans les différentes positions illustrées ici, avec des épaisseurs adaptées pour obtenir des ondulations de l'amplitude radiale désirée.

La figure 4 montre une rainure 25 borgne donc débouchant dans un seul sillon circonférentiel (24).

La figure 5 montre que les rainures 25 peuvent avoir une profondeur faible, inférieure à 2 mm.

La figure 6 représente une courbe de fond avec plusieurs niveaux de courbures. Il est possible d'avoir des courbes de fond rectilignes, ou rectilignes par morceaux.

La figure 7 représente une nervure de la bande de roulement radialement extérieure à une ondulation 6, comprenant une rainure débouchante 25 dans deux sillons circonférentiels 24 de part et d'autre de la nervure et la courbe de fond Cf de la dite rainure. Pour la figure A1, selon l'invention Cf est adaptée à l'ondulation. Pour la figure B1 selon l'état de l'art, Cf n'est pas adaptée à l'ondulation de la couche de sommet la plus radialement extérieure à l'aplomb de la nervure. Les figures A2 et B2 représentent les nervures respectivement A1 et B1 après usure. En raison de l'ondulation, les nervures vont avoir une usure plus prononcée au niveau des falaises des sillons circonférentiels. Par l'effet de la pression, les couches de travail vont se tendre et l'ondulation va perdre de l'amplitude radiale A et le centre de la nervure de se creuser vis-à-vis des falaises des sillons générant une forme d'usure plus accentuée à cet endroit. Pour une courbe de fond Cf non adaptée, la rainure va disparaître au niveau des falaises des nervures comme sur le schéma B2. Dans l'aire de contact, cette rainure qui n'est pas disposée sur la largeur totale de la nervure va occlure de l'air générant un bruit en sortie d'aire de contact. Avec une courbe de fond adaptée, la rainure reste débouchante et le niveau de bruit n'est pas détérioré.

L'invention a été réalisée sur un pneumatique A de dimension 295/35 ZR20 destiné à équiper un véhicule de tourisme. Les profondeurs D des sillons circonférentiels de la sculpture sont égales à 7.5 mm, pour des largeurs Ws variant proche de 4 mm. L'armature sommet est composée de deux couches de travail dont les éléments de renforcement font un angle de + ou - 38° avec la direction circonférentielle et d'une couche de frettage dont les éléments de renforcement font un angle de + ou - 3° avec la direction circonférentielle. Les éléments de renforcement de la couche de travail, sont des câbles métalliques continus. La couche de sommet la plus radialement extérieure est ondulée de telle manière que 50% de sa surface radialement extérieure (SRE) est radialement extérieure d'au moins 1 mm par rapport à cette même surface à l'aplomb des sillons circonférentiels les plus proches. Les ondulations ont des amplitudes radiales de 2 mm La distance radiale (d1) entre la surface radialement extérieure (SRE) de la couche de travail la plus radialement extérieure (41) et la face de fond (243) des sillons circonférentiels (24), est égale à 1.6 mm. La sculpture comporte 4 sillons circonférentiels et 4 nervures dans la partie centrale 22 de la bande de roulement. Chaque nervure de la partie centrale 22 est radialement extérieure à une ondulation 51 des couches de sommet 41,42, 5. Les nervures comprennent des rainures débouchantes 25 dans les sillons circonférentiels 24 d'une profondeur de 3mm et espacées les unes des autres d'un pas moyen égal à 30 mm. Les courbes de fond des rainures sont toutes adaptées aux ondulations des couches de sommet 5, 41,42. La distance d2 entre les points d'intersection Ps de la courbe de fond et des sillons circonférentiels et le point Pext le plus radialement extérieur de la courbe de fond des rainures est au moins égale à 0.7 mm. Les courbes de fond sont radialement croissantes depuis les points Ps et Pext.

Les pneumatiques A ont été comparés avec les pneumatiques B de même dimension, possédant les mêmes caractéristiques à cela près que les courbes de fond des rainures des nervures centrales ne sont pas adaptées aux ondulations des couches de sommet, les courbes de fond des rainures étant sur un même rayon, d'un sillon à l'autre.

Les pneumatiques sont testés en bruit à l'état neuf selon la norme européenne en vigueur. Il n'est pas mesuré d'écart de performance. Les pneumatiques sont ensuite usés sur route ouverte selon les mêmes conditions de roulage, en utilisant des mêmes types de véhicules, aux mêmes vitesses. Après 1.7 mm d'usure, la majorité des rainures pour le pneumatique A selon l'invention et le pneumatique B selon l'état de la technique, présentent une usure plus accentuée au niveau des falaises des nervures qu'en leurs centres. Dans le pneumatique A selon l'invention, la majorité des rainures, du fait de l'adaptation de la courbe de fond Cf à la présence des ondulations des couches de sommet, reste débouchante. Pour le pneumatique B, les rainures sont usées sur les falaises de sorte que les extrémités des rainures, sous leur forme usée, se trouvent sur le haut de la nervure. Un test en bruit cost-by de ces deux pneumatiques montre une performance du pneumatique A meilleure que la performance du pneumatique B de l'ordre de 0.7 dB selon un protocole de test conforme à la directive Européenne en vigueur 2001_43_CE.

## Revendications

1. Pneumatique (1), comprenant :
- une bande de roulement (2) destinée à entrer en contact avec un sol par l'intermédiaire d'une surface de roulement (21) d'une largeur axiale L et comprenant une partie centrale (22) de la bande de roulement d'une largeur égale à 0,8*L, cette partie centrale (22) de la bande de roulement (2) comprenant au moins deux sillons circonférentiels (24),
- un sillon circonférentiel (24) formant un espace débouchant sur toute la circonférence du pneumatique sur la surface de roulement (21) étant délimitée par deux faces latérales principales (241, 242) reliées par une face de fond (243), et ayant une largeur moyenne Ws au moins égale à 6 mm et une profondeur D au moins égale à 4 mm,
- la partie centrale (22) de la bande de roulement comprenant des rainures formant un espace débouchant sur la surface de roulement (21), formant un angle au moins égal à 15° avec l'axe circonférentiel, étant délimitée par deux faces latérales principales (251, 252) reliées par une face de fond (253), une rainure (25) ayant une largeur Wr définie par la distance moyenne entre les deux faces latérales (251, 252), au moins cinquante pourcent des rainures ayant une largeur Wr étant des rainures débouchantes, à savoir débouchant dans un ou deux sillons circonférentiels,
- chaque rainure débouchante (25), comprenant une courbe de fond Cf constituée par l'ensemble des points les plus radialement intérieurs de la surface de fond de la dite rainure, chaque courbe de fond comprenant au moins un point Ps, et au plus deux, en commun avec le ou les deux sillons dans lequel débouche ladite rainure et un point le plus radialement extérieur Pext,
- une couche de carcasse (9) et une armature de sommet (3), radialement intérieure à la bande de roulement (2), comprenant au moins une couche de sommet (5, 41, 42), la ou les couches de sommet étant des couches d'éléments de renforcement,
- l'armature de sommet comprenant une armature de travail (4), comprenant au moins une couche de travail (41, 42),
- chaque couche de travail (41,42) comprenant des éléments de renforcement (411), au moins partiellement métalliques enrobés par un matériau élastomérique, parallèles entre eux et formant avec la direction circonférentielle (XX') du pneumatique, un angle orienté dont la valeur absolue est au moins égale à 15° et au plus égale à 50°,
- chaque couche de sommet (5, 41, 42) s'étendant radialement depuis une surface radialement intérieure (SRI) jusqu'à une surface radialement extérieure (SRE),
- la couche de sommet (5) la plus radialement extérieure à l'aplomb de la partie centrale (22) de la bande de roulement (2), comprenant au moins une ondulation dite ondulation centrale (51), d'amplitude radiale A,
- la portion de la surface radialement extérieure (SRE) de la couche de sommet (5) de ladite ondulation centrale (51) est radialement extérieure aux points de la couche de sommet (5) la plus radialement extérieure à l'aplomb de la face de fond (243) du sillon circonférentiel (24) le plus proche de ladite ondulation (51),
- sur au moins 10% de la surface radialement extérieure (SRE) de ladite couche de sommet (5) à l'aplomb de la partie centrale de la bande de roulement, la distance radiale (do) entre la surface radialement extérieure (SRE) de la couche de sommet (5) la plus radialement extérieure et la surface de roulement (21) au niveau de ladite ondulation (51), est inférieure d'au moins 1 mm à la distance radiale (dc) entre la surface radialement extérieure (SRE) de la couche de sommet (5) la plus radialement extérieure et la surface de roulement (21), distance à l'aplomb de la face de fond (243) du sillon circonférentiel (24) le plus proche du point considéré de la dite surface,
- la distance radiale (d1) entre la surface radialement extérieure (SRE) de la couche de sommet la plus radialement extérieure (5) et la face de fond (243) des sillons circonférentiels (24) est au plus égale à 4 mm,
**caractérisé en ce que** la largeur Wr est au moins égale à 0.5 mm, **en ce que** au moins 50% des rainures débouchantes (25) radialement extérieures à une ondulation centrale (51) de la couche d'éléments de renforcement la plus radialement extérieure (5), sont dites adaptées à l'ondulation centrale, une rainure débouchante adaptée à l'ondulation, à laquelle elle est radialement extérieure, étant telle que le ou les points Ps d'intersection de la courbe de fond Cf de la dite rainure débouchante adaptée à l'ondulation (25) et du ou des sillons circonférentiel (24) dans le ou lesquels la dite rainure débouchante adaptée à l'ondulation (25) débouche, sont distants du point Pext le plus radialement extérieur de la dite courbe de fond Cf, d'une distance radiale (d2) au moins égale au tiers de l'amplitude radiale (A/3) de l'ondulation centrale (51) située à l'aplomb de la dite rainure débouchante adaptée à l'ondulation (25) **et en ce que** la dite courbe Cf est radialement croissante depuis le ou les points d'intersection Ps vers le point Pext.

2. Pneumatique selon la revendication précédente, dans lequel une rainure débouchante (25) adaptée à l'ondulation centrale (51) de la couche de sommet (5) la plus radialement extérieure, à laquelle elle est radialement extérieure, est telle que la distance radiale (d2) entre le ou les points Ps d'intersection de la courbe de fond Cf de la dite rainure et du ou des sillons circonférentiel (24) dans le ou lesquels la dite rainure (25) débouche, et le point Pext le plus radialement extérieur de la dite courbe de fond Cf est au moins égale à la moitié de l'amplitude radiale (0.5*A) de l'ondulation centrale (51) située à l'aplomb de la dite rainure (25), et au plus égale à 1.5 fois l'amplitude radiale (1.5*A) de l'ondulation centrale (51) située à l'aplomb de la dite rainure (25).

3. Pneumatique selon l'une quelconque des revendications précédentes, dans lequel toutes les couches de sommet (41, 42, 5) sont ondulées, et leurs ondulations (51) sont sensiblement identiques en position et en amplitude A radiale sur leurs portions situées à l'aplomb de la partie centrale de la bande de roulement.

4. Pneumatique selon l'une quelconque des revendications précédentes, dans lequel au moins 90 pourcents et de préférence toutes les rainures débouchantes (25) radialement extérieures à une ondulation centrale (51) de la couche de sommet la plus radialement extérieure (5), sont adaptées aux dites ondulations centrales (51) de la couche de sommet (5) la plus radialement extérieure auxquelles elles sont respectivement radialement extérieures.

5. Pneumatique selon l'une quelconque des revendications précédentes, dans lequel pour la partie de l'armature de sommet (3) à l'aplomb de la partie centrale de la bande de roulement, sur au moins 20%, préférentiellement au moins 30% et au plus 85%, de la surface radialement extérieure (SRE) de la couche de sommet (5) la plus radialement extérieure, la distance radiale (do) entre la surface radialement extérieure (SRE) de la couche de sommet (5) la plus radialement extérieure et la surface de roulement (21) est inférieure d'au moins 1.5 mm, préférentiellement 2 mm, à la distance radiale (dc) entre la surface radialement extérieure (SRE) de la couche de sommet (5) la plus radialement extérieure et la surface de roulement (21), distance mesurée à l'aplomb du point le plus radialement intérieur de la face de fond (243) du sillon circonférentiel (24) le plus proche de ladite ondulation centrale (51) du point considéré.

6. Pneumatique selon l'une quelconque des revendications précédentes, dans lequel la distance radiale (d1) entre la surface radialement extérieure (SRE) de la couche de sommet la plus radialement extérieure (5) et la face de fond (243) du sillon circonférentiel (24) est au moins égale à 0.5 mm et au plus égale à 3 mm, préférentiellement au moins égale à 0.7 mm et au plus égale à 2 mm.

7. Pneumatique selon l'une quelconque des revendications précédentes, comprenant au moins un témoin d'usure (11) et dans lequel la distance radiale minimale (d0) entre la surface radialement extérieure (SRE) de la couche de sommet (5) la plus radialement extérieure de l'armature de sommet (3) et la surface de roulement (21) est au moins égale à la distance radiale (df) entre la surface de roulement (21) et le point le plus radialement extérieur du témoin d'usure (11).

8. Pneumatique selon l'une quelconque des revendications précédentes, dans lequel la distance radiale minimale (do) entre la surface radialement extérieure (SRE) de la couche de sommet (5) la plus radialement extérieure de l'armature de sommet (3) et la surface de roulement (21) est au plus égale à la profondeur D du sillon circonférentiel (24) le plus proche augmentée de 2 mm et au moins égale à la profondeur D du sillon circonférentiel (24) le plus proche diminuée de 2 mm et préférentiellement sensiblement égale à la profondeur D du sillon circonférentiel (24) le plus proche.

9. Pneumatique selon l'une quelconque des revendications précédentes, dans lequel au moins un matériau de bourrage (6) ayant une épaisseur radiale au moins égale à 0.3 mm, est positionnée à l'aplomb de chaque ondulation centrale (51) de la couche de sommet (5) la plus radialement extérieure de préférence radialement extérieure à la couche de carcasse (9), de préférence radialement intérieur à la couche de travail (42) la plus radialement intérieure.

10. Pneumatique selon la revendication précédente, la bande de roulement (2) étant constituée par au moins un mélange caoutchouteux, dans lequel la gomme de bourrage (6) est un mélange caoutchouteux ayant une perte dynamique tanδ1, mesurée à une température de 10°C et sous une contrainte de 0.7 MPa à 10 Hz, au plus égale et préférentiellement inférieure de 30% à la ou les pertes dynamiques tanδ2 du ou des matériaux caoutchouteux constitutifs de la bande de roulement (2), mesurées à une température de 10°C et sous une contrainte de 0.7 MPa à 10 Hz.

## Patentansprüche

1. Reifen (1), der Folgendes beinhaltet:
- eine Lauffläche (2), die dazu bestimmt ist, mittels einer Laufoberfläche (21) mit einer axialen Breite L mit einem Boden in Kontakt zu kommen, und die einen mittigen Teil (22) der Lauffläche mit einer Breite von 0,8*L beinhaltet, wobei dieser mittige Teil (22) der Lauffläche (2) mindestens zwei Umfangsrillen (24) beinhaltet,
- wobei eine Umfangsrille (24), die einen Raum bildet, der über den gesamten Umfang des Reifens an der Laufoberfläche (21) mündet, durch zwei Hauptseitenflächen (241, 242) begrenzt wird, die durch eine Bodenfläche (243) verbunden sind, und eine mittlere Breite Ws von mindestens 6 mm und eine Tiefe D von mindestens 4 mm aufweist,
- wobei der mittige Teil (22) der Lauffläche Nuten beinhaltet, die einen Raum, der an der Laufoberfläche (21) mündet, bilden, die mit der Umfangsachse einen Winkel von mindestens 15° bilden und die durch zwei Hauptseitenflächen (251, 252) begrenzt werden, die durch eine Bodenfläche (253) verbunden sind, wobei eine Nut (25) eine Breite Wr aufweist, die durch den mittleren Abstand zwischen den zwei Seitenflächen (251, 252) definiert ist, wobei mindestens fünfzig Prozent der Nuten mit einer Breite Wr mündende Nuten sind, das heißt in eine oder zwei Umfangsrillen münden,
- wobei jede mündende Nut (25) eine Bodenkurve Cf beinhaltet, die aus der Gesamtheit der radial am weitesten innen liegenden Punkte der Bodenoberfläche der Nut besteht, wobei jede Bodenkurve mindestens einen und höchstens zwei Punkte Ps, die sie mit der einen oder den zwei Rillen, in die die Nut mündet, gemein hat, und einen radial am weitesten außen liegenden Punkt Pext beinhaltet,
- wobei eine Karkassenschicht (9) und eine Scheitelbewehrung (3), die zu der Lauffläche (2) radial innen liegend ist, mindestens eine Scheitelschicht (5, 41, 42) beinhalten, wobei die eine oder die mehreren Scheitelschichten Schichten mit Verstärkungselementen sind,
- wobei die Scheitelbewehrung eine Arbeitsbewehrung (4) beinhaltet, die mindestens eine Arbeitsschicht (41, 42) beinhaltet,
- wobei jede Arbeitsschicht (41, 42) Verstärkungselemente (411) beinhaltet, die mindestens teilweise von einem Elastomermaterial umhüllt sind, untereinander parallel sind und mit der Umfangsrichtung (XX') des Reifens einen gerichteten Winkel bilden, dessen Absolutwert mindestens 15° und höchstens 50° beträgt,
- wobei sich jede Scheitelschicht (5, 41, 42) von einer radial innen liegenden Oberfläche (SRI) bis zu einer radial außen liegenden Oberfläche (SRE) radial erstreckt,
- wobei die radial am weitesten außen liegende Scheitelschicht (5), die sich lotrecht zu dem mittigen Teil (22) der Lauffläche (2) befindet, mindestens eine Wölbung, als mittige Wölbung (51) bezeichnet, mit einer radialen Amplitude A beinhaltet,
- wobei der Abschnitt der radial außen liegenden Oberfläche (SRE) der Scheitelschicht (5) der mittigen Wölbung (51) zu den Punkten der radial am weitesten außen liegenden Scheitelschicht (5), die sich lotrecht zu der Bodenfläche (243) der Umfangsrille (24), die der Wölbung (51) am nächsten ist, befinden, radial außen liegend ist,
- wobei über mindestens 10 % der radial außen liegenden Oberfläche (SRE) der Scheitelschicht (5), die sich lotrecht zu dem mittigen Teil der Lauffläche befindet, der radiale Abstand (do) zwischen der radial außen liegenden Oberfläche (SRE) der radial am weitesten außen liegenden Scheitelschicht (5) und der Laufoberfläche (21) im Bereich der Wölbung (51) um mindestens 1 mm kleiner ist als der radiale Abstand (dc) zwischen der radial außen liegenden Oberfläche (SRE) der radial am weitesten außen liegenden Scheitelschicht (5) und der Laufoberfläche (21), wobei sich dieser Abstand lotrecht zu der Bodenfläche (243) derjenigen Umfangsrille (24) befindet, die dem betrachteten Punkt der Oberfläche am nächsten ist,
- wobei der radiale Abstand (d1) zwischen der radial außen liegenden Oberfläche (SRE) der radial am weitesten außen liegenden Scheitelschicht (5) und der Bodenfläche (243) der Umfangsrillen (24) höchstens 4 mm beträgt,
**dadurch gekennzeichnet, dass** die Breite Wr mindestens 0,5 mm beträgt, **dass** mindestens 50 % der mündenden Nuten (25), die zu einer mittigen Wölbung (51) der radial am weitesten außen liegenden Schicht aus Verstärkungselementen (5) radial außen liegend sind, als an die mittige Wölbung angepasst bezeichnet werden, wobei eine an die Wölbung, zu der sie sich radial außen liegend befindet, angepasste mündende Nut derart ist, dass der oder die Schnittpunkte Ps der Bodenkurve Cf der an die Wölbung angepassten mündenden Nut (25) mit der oder den Umfangsrillen (24), in die die an die Wölbung (25) angepasste mündende Nut mündet, von dem radial am weitesten außen liegenden Punkt Pext der Bodenkurve Cf um einen radialen Abstand (d2) entfernt sind, der mindestens ein Drittel der radialen Amplitude (A/3) der mittigen Wölbung (51) beträgt, die sich lotrecht zu der an die Wölbung angepassten mündenden Nut (25) befindet, **und dass** die Kurve Cf von dem oder den Schnittpunkten Ps zu dem Punkt Pext hin radial ansteigend ist.

2. Reifen nach dem vorhergehenden Anspruch, wobei eine an die mittige Wölbung (51) der radial am weitesten außen liegenden Scheitelschicht (5) angepasste mündende Nut (25), zu der sie radial außen liegt, derart ist, dass der radiale Abstand (d2) zwischen dem oder den Schnittpunkten Ps der Bodenkurve Cf der Nut mit der oder den Umfangsrillen (24), in die die Nut (25) mündet, und dem radial am weitesten außen liegenden Punkt Pext der Bodenkurve Cf mindestens die Hälfte der radialen Amplitude (0,5*A) der mittigen Wölbung (51), die sich lotrecht zu der Nut (25) befindet, und höchstens das 1,5-fache der radialen Amplitude (1,5*A) der mittigen Wölbung (51), die sich lotrecht zu der Nut (25) befindet, beträgt.

3. Reifen nach einem der vorhergehenden Ansprüche, wobei alle Scheitelschichten (41, 42, 5) gewölbt sind und ihre Wölbungen (51) an ihren Abschnitten, die sich lotrecht zu dem mittigen Teil der Lauffläche befinden, in Bezug auf Position und radiale Amplitude A im Wesentlichen identisch sind.

4. Reifen nach einem der vorhergehenden Ansprüche, wobei mindestens 90 Prozent und vorzugsweise alle mündenden Nuten (25), die zu einer mittigen Wölbung (51) der radial am weitesten außen liegenden Scheitelschicht (5) radial außen liegen, an die mittigen Wölbungen (51) der radial am weitesten außen liegenden Scheitelschicht (5), zu denen sie jeweils radial außen liegen, angepasst sind.

5. Reifen nach einem der vorhergehenden Ansprüche, wobei für den Teil der Scheitelbewehrung (3), der sich lotrecht zu dem mittigen Teil der Lauffläche befindet, über mindestens 20 %, vorzugsweise mindestens 30 % und höchstens 85 % der radial außen liegenden Oberfläche (SRE) der radial am weitesten außen liegenden Scheitelschicht (5) der radiale Abstand (do) zwischen der radial außen liegenden Oberfläche (SRE) der radial am weitesten außen liegenden Scheitelschicht (5) und der Laufoberfläche (21) um mindestens 1,5 mm, vorzugsweise 2 mm, kleiner ist als der radiale Abstand (dc) zwischen der radial außen liegenden Oberfläche (SRE) der radial am weitesten außen liegenden Scheitelschicht (5) und der Laufoberfläche (21), wobei dieser Abstand lotrecht zu dem radial am weitesten innen liegenden Punkt der Bodenfläche (243) derjenigen Umfangsrille (24), die der mittigen Wölbung (51) des betrachteten Punkts am nächsten ist, gemessen wird.

6. Reifen nach einem der vorhergehenden Ansprüche, wobei der radiale Abstand (d1) zwischen der radial außen liegenden Oberfläche (SRE) der radial am weitesten außen liegenden Scheitelschicht (5) und der Bodenfläche (243) der Umfangsrille (24) mindestens 0,5 mm und höchstens 3 mm, vorzugsweise mindestens 0,7 mm und höchstens 2 mm, beträgt.

7. Reifen nach einem der vorhergehenden Ansprüche, der mindestens einen Verschleißanzeiger (11) beinhaltet, und wobei der minimale radiale Abstand (d0) zwischen der radial außen liegenden Oberfläche (SRE) der radial am weitesten außen liegenden Scheitelschicht (5) der Scheitelbewehrung (3) und der Laufoberfläche (21) mindestens gleich dem radialen Abstand (df) zwischen der Laufoberfläche (21) und dem radial am weitesten außen liegenden Punkt des Verschleißanzeigers (11) ist.

8. Reifen nach einem der vorhergehenden Ansprüche, wobei der minimale radiale Abstand (do) zwischen der radial außen liegenden Oberfläche (SRE) der radial am weitesten außen liegenden Scheitelschicht (5) der Scheitelbewehrung (3) und der Laufoberfläche (21) höchstens gleich der Tiefe D der am nächsten gelegenen Umfangsrille (24), erhöht um 2 mm, und mindestens gleich der Tiefe D der am nächsten gelegenen Umfangsrille (24), verringert um 2 mm, und vorzugsweise im Wesentlichen gleich der Tiefe D der am nächsten gelegenen Umfangsrille (24) ist.

9. Reifen nach einem der vorhergehenden Ansprüche, wobei mindestens ein Füllmaterial (6), das eine radiale Dicke von mindestens 0,3 mm aufweist, lotrecht zu jeder mittigen Wölbung (51) der radial am weitesten außen liegenden Scheitelschicht (5) angeordnet ist, vorzugsweise zu der Karkassenschicht (9) radial außen liegend, vorzugsweise zu der radial am weitesten innen liegenden Arbeitsschicht (42) radial innen liegend.

10. Reifen nach dem vorhergehenden Anspruch, wobei die Lauffläche (2) aus mindestens einer Kautschukmischung besteht, wobei das Füllgummi (6) eine Kautschukmischung ist, die einen dynamischen Verlustfaktor tanδ1, gemessen bei einer Temperatur von 10 °C und unter einer Belastung von 0,7 MPa bei 10 Hz, von höchstens gleich und vorzugsweise kleiner als 30 % des oder der dynamischen Verlustfaktoren tanδ2 des oder der Kautschukmaterialien, aus dem bzw. denen die Lauffläche (2) besteht, gemessen bei einer Temperatur von 10° C und unter einer Belastung von 0,7 MPa bei 10 Hz, aufweist.

## Claims

1. Tyre (1) comprising:
- a tread (2) intended to come into contact with the ground via a tread surface (21) having an axial width L and comprising a central part (22) of the tread having a width equal to 0.8*L, this central part (22) of the tread (2) comprising at least two circumferential furrows (24),
- a circumferential furrow (24) forming a space that opens onto the tread surface (21) around the entire circumference of the tyre and being delimited by two main lateral faces (241, 242) connected by a bottom face (243), and having a mean width Ws at least equal to 6 mm and a depth D at least equal to 4 mm,
- the central part (22) of the tread comprising grooves forming a space that opens onto the tread surface (21), forming an angle at least equal to 15° with the circumferential axis, and being delimited by two main lateral faces (251, 252) connected by a bottom face (253), a groove (25) having a width Wr defined by the mean distance between the two lateral faces (251, 252), at least fifty per cent of thegrooves having a width Wr being open grooves, namely grooves that open into one or two circumferential furrows,
- each open groove (25) comprising a bottom curve Cf formed by all of the radially innermost points of the bottom surface of said groove, each bottom curve comprising at least one point Ps, and at most two, in common with the furrow or the two furrows into which said groove opens, and a radially outermost point Pext,
- a carcass layer (9) and a crown reinforcement (3), radially on the inside of the tread (2), comprising at least one crown layer (5, 41, 42), the crown layer(s) being layers of reinforcing elements,
- the crown reinforcement comprising a working reinforcement (4) comprising at least one working layer (41, 42),
- each working layer (41, 42) comprising reinforcing elements (411) which are at least partially made of metal coated in an elastomer material, are mutually parallel and form with the circumferential direction (XX') of the tyre an oriented angle of which the absolute value is at least equal to 15° and at most equal to 50°,
- each crown layer (5, 41, 42) extending radially from a radially inner surface (RIS) to a radially outer surface (ROS),
- the radially outermost crown layer (5) vertically beneath the central part (22) of the tread (2) comprising at least one undulation, referred to as central undulation (51), with a radial amplitude A,
- the portion of the radially outer surface (ROS) of the crown layer (5) of said central undulation (51) is radially on the outside of the points of the radially outermost crown layer (5) vertically beneath the bottom face (243) of the circumferential furrow (24) closest to said undulation (51),
- over at least 10% of the radially outer surface (ROS) of said crown layer (5) vertically beneath the central part of the tread, the radial distance (do) between the radially outer surface (ROS) of the radially outermost crown layer (5) and the tread surface (21) at said undulation (51) is at least 1 mm less than the radial distance (dc) between the radially outer surface (ROS) of the radially outermost crown layer (5) and the tread surface (21), this being the distance vertically beneath the bottom face (243) of the circumferential furrow (24) closest to the point in question on said surface.
- the radial distance (d1) between the radially outer surface (ROS) of the radially outermost crown layer (5) and the bottom face (243) of the circumferential furrows (24) is at most equal to 4 mm,
**characterized in that** the width Wr is at least equal to 0,5 mm, **in that** at least 50% of the open grooves (25) radially on the outside of a central undulation (51) of the radially outermost layer of reinforcing elements (5) are said to be adapted to the central undulation, an open groove that is adapted to the undulation which it is radially on the outside of being such that the intersection point(s) Ps of the bottom curve Cf of said open groove adapted to the undulation (25) and of the circumferential furrow(s) (24) into which said open groove adapted to the undulation (25) opens are at a distance from the radially outermost point Pext of said bottom curve Cf by a radial distance (d2) at least equal to one third of the radial amplitude (A/3) of the central undulation (51) situated vertically beneath said open groove adapted to the undulation (25), **and in that** said curve Cf increases radially from the intersection point(s) Ps to the point Pext.

2. Tyre according to the preceding claim, wherein an open groove (25) adapted to the central undulation (51) of the radially outermost crown layer (5) which it is radially on the outside of is such that the radial distance (d2) between the intersection point(s) Ps of the bottom curve Cf of said groove and of the circumferential furrow(s) (24) into which said groove (25) opens and the radially outermost point Pext of said bottom curve Cf is at least equal to half the radial amplitude (0.5*A) of the central undulation (51) situated vertically beneath said groove (25) and at most equal to 1.5 times the radial amplitude (1.5*A) of the central undulation (51) situated vertically beneath said groove (25).

3. Tyre according to either one of the preceding claims, wherein all the crown layers (41, 42, 5) have undulations, and their undulations (51) are substantially identical in terms of position and of radial amplitude A in their portions situated vertically beneath the central part of the tread.

4. Tyre according to any one of the preceding claims, wherein at least 90 per cent and preferably all of the open grooves (25) radially on the outside of a central undulation (51) of the radially outermost crown layer (5) are adapted to said central undulations (51), which they are respectively radially on the outside of, of the radially outermost crown layer (5).

5. Tyre according to any one of the preceding claims, wherein, for the part of the crown reinforcement (3) vertically beneath the central part of the tread, over at least 20%, preferably at least 30% and at most 85%, of the radially outer surface (ROS) of the radially outermost crown layer (5), the radial distance (do) between the radially outer surface (ROS) of the radially outermost crown layer (5) and the tread surface (21) is at least 1.5 mm, preferably 2 mm, less than the radial distance (dc) between the radially outer surface (ROS) of the radially outermost crown layer (5) and the tread surface (21), this being the distance measured vertically beneath the radially innermost point of the bottom face (243) of the circumferential furrow (24) closest to said central undulation (51) at the point in question.

6. Tyre according to any one of the preceding claims, wherein the radial distance (d1) between the radially outer surface (ROS) of the radially outermost crown layer (5) and the bottom face (243) of the circumferential furrow (24) is at least equal to 0.5 mm and at most equal to 3 mm, preferably at least equal to 0.7 mm and at most equal to 2 mm.

7. Tyre according to any one of the preceding claims, comprising at least one wear indicator (11), wherein the minimum radial distance (d0) between the radially outer surface (ROS) of the radially outermost crown layer (5) of the crown reinforcement (3) and the tread surface (21) is at least equal to the radial distance (df) between the tread surface (21) and the radially outermost point of the wear indicator (11).

8. Tyre according to any one of the preceding claims, wherein the minimum radial distance (do) between the radially outer surface (ROS) of the radially outermost crown layer (5) of the crown reinforcement (3) and the tread surface (21) is at most equal to the depth D of the closest circumferential furrow (24) plus 2 mm and at least equal to the depth D of the closest circumferential furrow (24) minus 2 mm, and preferably substantially equal to the depth D of the closest circumferential furrow (24).

9. Tyre according to any one of the preceding claims, wherein at least one filling material (6) having a radial thickness at least equal to 0.3 mm is positioned vertically beneath each central undulation (51) of the radially outermost crown layer (5) and preferably radially on the outside of the carcass layer (9), preferably radially on the inside of the radially innermost working layer (42).

10. Tyre according to the preceding claim, the tread (2) being made up of at least one rubber compound, wherein the filling rubber (6) is a rubber compound having a dynamic loss tanδ1, measured at a temperature of 10°C and under a stress of 0.7 MPa at 10 Hz, at most equal to and preferably 30% less than the dynamic loss(es) tanδ2 of the rubber material(s) of which the tread (2) is made, measured at a temperature of 10°C and under a stress of 0.7 MPa at 10 Hz.
